# EUROPÄISCHE PATENTSCHRIFT

(11) **EP 4 476 643 B1**
(45) Veröffentlichungstag und Bekanntmachung des Hinweises auf die Patenterteilung: **05.11.2025**
(21) Anmeldenummer: 23713044.8
(22) Anmeldetag: 06.03.2023
(51) Int. Cl.: G06F 21/53, G06F 21/60, G06F 21/62, H04L 9/40

(54) **VERFAHREN UND VORRICHTUNG ZUM BETREIBEN EINES AUTOMATISIERUNGSSYSTEMS**
METHOD AND DEVICE FOR OPERATING AN AUTOMATION SYSTEM
PROCÉDÉ ET DISPOSITIF DE FONCTIONNEMENT D'UN SYSTÈME D'AUTOMATISATION

(30) Priorität: 23.03.2022 EP 22163896
(43) Veröffentlichungstag der Anmeldung: 18.12.2024
(73) Patentinhaber: Siemens Aktiengesellschaft, 80333 München (DE)
(72) Erfinder: FALK, Rainer, 85435 Erding (DE)
(74) Vertreter: Siemens Patent Attorneys
(86) Internationale Anmeldenummer: PCT/EP2023/055532
(87) Internationale Veröffentlichungsnummer: WO 2023/180047

(56) Entgegenhaltungen:
- PELTONEN MIKAEL: "PLC Virtualization and Software Defined Architectures in Industrial Control Systems", 4 October 2017 (2017-10-04), pages 1 - 53, XP055956278, Retrieved from the Internet <URL:https://www.theseus.fi/handle/10024/134029> [retrieved on 20220830]
- ANONYMOUS: "What is the Purdue Model for ICS Security?", 11 February 2022 (2022-02-11), pages 1 - 5, XP055956281, Retrieved from the Internet <URL:https://web.archive.org/web/20220211230122/https://www.zscaler.com/resources/security-terms-glossary/what-is-purdue-model-ics-security> [retrieved on 20220830]
- DECUSATIS CASIMER ET AL: "Implementing Zero Trust Cloud Networks with Transport Access Control and First Packet Authentication", 2016 IEEE INTERNATIONAL CONFERENCE ON SMART CLOUD (SMARTCLOUD), IEEE, 18 November 2016 (2016-11-18), pages 5 - 10, XP033029302, DOI: 10.1109/SMARTCLOUD.2016.22
- SCOTT ROSE ET AL: "Zero Trust Architecture NIST SP 800-207", 11 August 2020 (2020-08-11), pages 1 - 59, XP061057776, Retrieved from the Internet <URL:https://nvlpubs.nist.gov/nistpubs/SpecialPublications/NIST.SP.800-207.pdf> [retrieved on 20200811], DOI: 10.6028/NIST.SP.800-207
- CRUZ TIAGO ET AL: "Virtualizing Programmable Logic Controllers: Toward a Convergent Approach", IEEE EMBEDDED SYSTEMS LETTERS, IEEE, USA, vol. 8, no. 4, 1 December 2016 (2016-12-01), pages 69 - 72, XP011635046, ISSN: 1943-0663, [retrieved on 20161122], DOI: 10.1109/LES.2016.2608418
- BOUGHTON PAUL: "New Modbus TCP/IP interface for electric actuators", 21 April 2015 (2015-04-21), pages 1 - 6, XP055956288, Retrieved from the Internet <URL:https://web.archive.org/web/20210621110617/https://www.engineerlive.com/content/new-modbus-tcpip-interface-electric-actuators> [retrieved on 20220830]

## Beschreibung

Die vorliegende Erfindung betrifft ein Verfahren und ein Computerprogrammprodukt zum Betreiben eines Automatisierungssystems. Des Weiteren betrifft die vorliegende Erfindung eine Vorrichtung zum Betreiben eines Automatisierungssystems und ein Automatisierungssystem mit einer solchen Vorrichtung.

Künftig werden in Automatisierungssystemen zunehmend Automatisierungsfunktionen virtualisiert realisiert werden. Die dabei verwendete Compute-Plattform kann dabei unter der Kontrolle des Betreibers des Automatisierungssystems selbst liegen, es können jedoch auch von Dritten betriebene und damit kontrollierte Compute-Plattformen oder Compute-Infrastrukturen verwendet werden.

In einem cyber-physischen System (CPS) wird die Schnittstelle zwischen virtueller Umgebung und realer, physikalischer Umgebung durch eine Aktor-/Sensor-Vorrichtung (Aktor-/Sensor-Device) realisiert. Eine virtualisierte Automatisierungsfunktion, wie z. B. ein virtualisiertes Steuergerät oder eine virtualisierte PLC (PLC; Programmable Logic Controller), ist dabei beispielsweise als virtuelle Maschine oder als Container realisiert, welche über ein Kommunikationsnetzwerk auf die Aktor-/Sensor-Vorrichtung zugreifen kann, um auf die reale Umgebung des Automatisierungssystems einzuwirken oder um Informationen der realen Umgebung des Automatisierungssystems zu erfassen. Wenn aber, wie oben ausgeführt, die hierzu eingesetzte Compute-Plattform oder Compute-Infrastruktur auch von Dritten betrieben werden kann, so sind erhöhte Sicherheitsvorkehrungen notwendig. Insbesondere wenn, wie oben ausgeführt, eine Compute-Plattform, auf welcher Automatisierungsfunktionen für das Automatisierungssystem ausführbar sind, von Dritten betrieben wird, so sind Maßnahmen eines erhöhten Manipulationsschutzes erforderlich.

Peltonen Mikael: "PLC Virtualization and Software Defined Architectures in Industrial Control Systems", 4. Oktober 2017, XP055956278; Anonymous: "What is the Purdue Model for ICS Security?", 11. Februar 2022, XP055956281; DECUSATIS CASIMER ET AL: "Implementing Zero Trust Cloud Networks with Transport Access Control and First Packet Authentication",2016 IEEE INTERNATIONAL CONFERENCE ON SMART CLOUD (SMARTCLOUD), IEEE, 18. November 2016, XP033029302,DOI: 10.1109/ SMARTCLOUD.2016.22; SCOTT ROSE ET AL: "Zero Trust Architecture NIST SP 800-207", 11. August 2020, Seiten 1-59, XP061057776, DOI: 10.6028/ NIST.SP.800-207; und CRUZ TIAGO ET AL: "Virtualizing Programmable Logic Controllers: Toward a Convergent Approach", IEEE EMBEDDED SYSTEMS LETTERS, IEEE, USA, Bd. 8, Nr. 4, 1. Dezember 2016, XP011635046, ISSN: 1943-0663, DOI: 10.1109/LES.2016.2608418 offenbaren den einschlägigen Stand der Technik.

Vor diesem Hintergrund besteht eine Aufgabe der vorliegenden Erfindung darin, den Betrieb eines Automatisierungssystems zu verbessern.

Gemäß einem ersten Aspekt wird ein Verfahren zum Betreiben eines Automatisierungssystems vorgeschlagen, welches eine erste Anzahl von I/O-Modulen und ein über ein Netzwerk mit der ersten Anzahl von I/O-Modulen gekoppeltes Computer-System aufweisend eine zweite Anzahl von virtualisierten Automatisierungs-Einheiten umfasst. Dabei ist an das jeweilige I/O-Modul eine jeweilige Anzahl von Aktor-/Sensor-Vorrichtungen gekoppelt. Das Verfahren umfasst die folgenden Schritte:
a) Bereitstellen einer kryptographisch geschützten Attestierung zur Angabe einer authentisierten Kommunikationsverbindung zwischen einem bestimmten I/O-Modul der ersten Anzahl und einer bestimmten virtualisierten Automatisierungs-Einheit der zweiten Anzahl, wobei die authentisierte Kommunikationsverbindung eine authentisierte Kommunikation zwischen der bestimmten virtualisierten Automatisierungs-Einheit mit dem bestimmten I/O-Modul und mit zumindest einem Teil der mit dem bestimmten I/O-Modul gekoppelten Aktor-/Sensor-Vorrichtungen umfasst, und
b) Prüfen der bereitgestellten kryptographisch geschützten Attestierung zur Ermittlung einer Berechtigungs-Information abhängig von dem durch die geprüfte Attestierung bestätigten Zugriff der bestimmten virtualisierten Automatisierungs-Einheit auf das bestimmte I/O-Modul und/oder auf den zumindest einen Teil der mit dem bestimmten I/O-Modul gekoppelten Aktor-/Sensor-Vorrichtungen.

Die ermittelte Berechtigungs-Information kann der bestimmten virtualisierten Automatisierungs-Einheit zugeordnet sein. Die virtualisierte Automatisierungs-Einheit ist zur Ausführung zumindest einer Automatisierungsfunktion oder Automatisierungssteuerungsfunktion eingerichtet. Die Automatisierungs-Einheit kann auch als Automatisierungsfunktion bezeichnet werden. Entsprechend kann die virtualisierte Automatisierungs-Einheit auch als virtualisierte Automatisierungsfunktion bezeichnet werden.

Durch die Verwendung der vorliegenden Attestierung und der Prüfung dieser zur Bereitstellung der Berechtigungs-Information kann verlässlich und manipulationsgeschützt überwacht werden, ob eine bestimmte virtualisierte Automatisierungs-Einheit tatsächlich über den erforderlichen Zugriff auf ein bestimmtes I/O-Modul und/oder die mit dem I/O-Modul gekoppelten Aktor-/Sensor-Vorrichtungen hat. Falls der erforderliche Zugriff aber nicht vorliegt, wird beispielsweise ein Maschinen-Hochlauf oder eine Sicherheits-Autokonfiguration, wie ein Onboarding oder ein Provisioning, nicht freigegeben. Vorliegend gibt also die Attestierung an, dass zwischen den Endpunkten der authentisierten Kommunikationsverbindung, vorliegend dem bestimmten I/O-Modul und der bestimmten virtualisierten Automatisierungs-Einheit, eine authentisierte Kommunikationsbeziehung besteht, welche einen Zugriff auf die mit dem bestimmten I/O-Modul gekoppelten Aktor-/Sensor-Vorrichtungen und damit auf die reale physikalische Umgebung des Automatisierungssystems erlaubt beziehungsweise ermöglicht.

Die Attestierung kann auch als Bestätigung, als Control-Session-Bestätigung oder als Control-Session-Attestierung bezeichnet werden. Hierbei ergibt sich der Begriff der Control-Session-Attestierung insbesondere daraus, dass sich der Wortbestandteil "Session" auf die authentifizierte Kommunikationsverbindung bezieht und der Wortbestandteil "Control" auf die Steuerungsmöglichkeit der virtualisierten Automatisierungs-Einheit auf das I/O-Modul und/oder auf die mit dem I/O-Modul gekoppelten Aktor-/Sensor-Vorrichtungen. Die Attestierung umfasst insbesondere eine Identifizierungs-Information des bestimmten I/O-Moduls und eine Identifizierungs-Information der bestimmten virtualisierten Automatisierungs-Einheit. Die jeweilige Identifizierungs-Information kann beispielsweise derart ausgebildet sein, dass sie ein jeweiliges Authentifizierungs-Geheimnis oder Authentifizierungs-Credential, beispielsweise ein digitales Zertifikat oder einen kryptographischen Schlüssel, umfasst oder referenziert, zum Beispiel durch einen kryptographischen Hash-Wert des verwendeten Authentisierungs-Credentials.

Anhand der Control-Session-Attestierung kann verlässlich und manipulationsgeschützt überprüft werden, dass eine bestimmte virtualisierte Automatisierungs-Einheit tatsächlich Zugriff auf eine bestimmte reale physikalische Umgebung des Automatisierungssystems über das bestimmte I/O-Modul hat. Vorzugsweise wird dabei überprüft, dass eine bestimmte virtualisierte Automatisierungs-Einheit Zugriff auf eine bestimmte Menge von I/O-Modulen eines als cyber-physisches System ausgebildeten Automatisierungssystems hat.

Die jeweilige Aktor-/Sensor-Vorrichtung ist als Aktor, als Sensor oder als Aktor- und Sensor-Vorrichtung ausgebildet. Das I/O-Modul kann auch als Eingabe-/Ausgabemodul bezeichnet werden und dient als Schnittstelle für die jeweils gekoppelten Aktor-/Sensor-Vorrichtungen. Das Computer-System kann auch als Compute-Plattform, Compute-Infrastruktur, Rechnersystem oder Rechenvorrichtung bezeichnet werden. Das Computer-System umfasst insbesondere Rechenkapazitäten und Speicherkapazitäten. Das Computer-System ist über ein Netzwerk, welches beispielsweise Ethernet, IP, Mobilfunk und WLAN umfassen kann, mit den I/O-Modulen gekoppelt. Vorliegend umfasst das Koppeln mittels des Netzwerkes auch ein Koppeln der Einheiten über verschiedene miteinander verbundene Netzwerke oder Unternetzwerke.

Kryptographisches Schützen der Attestierung umfasst insbesondere Integritätsschutz, Authentizität und/oder Vertraulichkeit.

Bevorzugt wird bei dem erfindungsgemäßen Verfahren eine Hochlauf-Funktionalität und/oder eine Sicherheitsautokonfigurations-Funktionalität, insbesondere ein Onboarding und/oder ein Provisioning, einer von der bestimmten virtualisierten Automatisierungs-Einheit gesteuerten Maschine des Automatisierungssystems in Abhängigkeit der Berechtigungs-Information freigegeben, insbesondere ausschließlich bei Vorliegen der Berechtigungs-Information, freigegeben. Besonders bevorzugt wird bei dem erfindungsgemäßen Verfahren die Hochlauf-Funktionalität und/oder Sicherheitsautokonfigurations-Funktionalität derart freigegeben, dass die Hochlauf-Funktionalität und/oder Sicherheitsautokonfigurations-Funktionalität aktiviert wird.

Gemäß einer Ausführungsform wird die Berechtigungs-Informationen in Abhängigkeit des Prüfens der bereitgestellten kryptographisch geschützten Attestierung angepasst.

Das Anpassen der Berechtigungs-Information umfasst insbesondere ein Setzen oder Erteilen der Berechtigungs-Information, ein Löschen der Berechtigungs-Information und/oder eine Änderung der Berechtigungs-Information hinsichtlich bestimmter Zugriffsrechte.

Gemäß einer weiteren Ausführungsform umfasst das Anpassen der Berechtigungs-Information:
- ein Registrieren der bestimmten virtualisierten Automatisierungs-Einheit bei dem Automatisierungssystem,
- ein Freigeben einer Ausstellung eines digitalen Zertifikats für die bestimmte virtualisierte Automatisierungs-Einheit, und/oder
- ein Freigeben eines Zugriffs für die bestimmte virtualisierte Automatisierungs-Einheit auf eine bestimmte Datenbank des Automatisierungssystems und/oder auf ein bestimmtes Backend-System des Automatisierungssystems.

Gemäß einer weiteren Ausführungsform umfasst das Anpassen der Berechtigungs-Information das Freigeben der Nutzung eines bestimmten kryptographischen Schlüssels, um beispielsweise verschlüsselte Rezepturen oder Fertigungsdaten des Automatisierungssystems entschlüsseln zu können. Das Backend-System ist beispielsweise ein SCADA-System, ein Produktionsplanungs-System, ein Manufacturing-Execution-System oder ein DiagnoseSystem des Automatisierungssystems.

Gemäß einer weiteren Ausführungsform sind die erste Anzahl von I/O-Modulen und die Aktor-/Sensor-Vorrichtungen in einem Steuerungs-Netzwerk zur Steuerung von Automatisierungskomponenten des Automatisierungsnetzwerkes angeordnet und das Computer-System ist in einem dem Steuerungsnetzwerk übergeordnetem Netzwerk, insbesondere einem Fabrik-Netzwerk, angeordnet.

Gemäß einer weiteren Ausführungsform umfasst die kryptographisch geschützte Attestierung eine Aktualitäts-Information zur Angabe eine Aktualität der authentisierten Kommunikationsverbindung zwischen dem bestimmten I/O-Modul und der bestimmten virtualisierten Automatisierungs-Einheit.

Die Aktualitäts-Information umfasst beispielsweise einen Zeitstempel, einen Zählerwert, einen Zufallswert oder einen Nonce-Wert. Damit indiziert die Aktualitäts-Information insbesondere eine Gültigkeit der kryptographisch geschützten Attestierung, im negativen Fall den Ablauf der Attestierung.

Gemäß einer weiteren Ausführungsform umfasst der Schritt a):
- Ausstellen der Attestierung durch das bestimmte I/O-Modul, und
- kryptographisches Schützen der ausgestellten Attestierung durch das bestimmte I/O-Modul.

Bei dieser Ausführungsform stellt das bestimmte I/O-Modul die Attestierung aus. Sie ist die nächstgelegene Vorrichtung zu den angeschlossenen Aktor-/Sensor-Vorrichtungen, und damit bringt diese Ausführungsform den höchsten Grad an Sicherheit und Manipulationsschutz hinsichtlich der Ausstellung und Attestierung.

Gemäß einer weiteren Ausführungsform umfasst der Schritt a):
- Ausstellen der Attestierung durch eine Komponente, insbesondere eine Hardware-Komponente, des Computer-Systems,
   und
- kryptographisches Schützen der ausgestellten Attestierung durch eine Komponente, insbesondere eine Hardware-Komponente, des Computer-Systems.

Die Komponente des Computer-Systems ist beispielsweise ein Kommunikations-Stack, ein Netzwerk-Adapter oder eine Runtime-Ausführungsumgebung des Computer-Systems, auf dem die bestimmte virtualisierte Automatisierungs-Einheit ausgeführt wird.

Gemäß einer weiteren Ausführungsform umfasst der Schritt b):
- Prüfen einer bestimmten Art des Zugriffes der bestimmten virtualisierten Automatisierungs-Einheit auf den zumindest einen Teil der mit dem bestimmten I/O-Modul gekoppelten Aktor-/Sensor-Vorrichtungen.

Die jeweilige Art des Zugriffes kann bestimmt sein durch unterschiedliche Vergaben von Zugriffsrechten. Die Art des Zugriffes kann beispielsweise ein Messen über einen bestimmten Sensor, ein Einwirken auf das Automatisierungssystem über einen bestimmten Aktuator oder einen zulässigen Wertebereich eines Einwirkens auf die reale physikalische Umgebung des Automatisierungssystems umfassen.

Das kryptographische Schützen der Attestierung umfasst vorzugsweise die Verwendung einer digitalen Signatur, insbesondere die Verwendung einer für die Attestierung spezifischen oder ausgestellten digitalen Signatur.

Gemäß einer weiteren Ausführungsform wird der Schritt b) im laufenden, operativen Betrieb des Automatisierungssystems wiederholt, insbesondere wiederholt nach einem vorbestimmten Muster, durchgeführt.

Das vorbestimmte Muster gibt beispielsweise eine bestimmte Zeitdauer vor, nach deren Ablauf der Schritt b) des Prüfens wiederholt durchgeführt wird.

Gemäß einer weiteren Ausführungsform wird eine Hochlauf-Funktionalität einer von der bestimmten virtualisierten Automatisierungs-Einheit gesteuerten Maschine des Automatisierungssystems in Abhängigkeit der bereitgestellten Berechtigungs-Information freigegeben, insbesondere ausschließlich bei Vorliegen der Berechtigungs-Information freigegeben.

Eine durch die virtualisierte Automatisierungs-Einheit gesteuerte oder überwachte Maschine des Automatisierungssystems läuft beispielsweise nur dann an, wenn anhand der vorliegenden Attestierung erfolgreich geprüft ist, dass diese bestimmte virtualisierte Automatisierungs-Einheit tatsächlich Zugriff auf das vorgelagerte I/O-Modul der Maschine und die Maschine hat.

Gemäß einer weiteren Ausführungsform wird der Schritt b) von einer von der ersten Anzahl von I/O-Modulen und von dem Computer-System separaten Überprüfungs-Einheit durchgeführt.

Die Überprüfungs-Einheit ist insbesondere separat oder getrennt von den I/O-Modulen und dem Computer-System und beispielsweise Teil eines Monitoring-Systems des Automatisierungssystems. Die Überprüfungs-Einheit ist insbesondere über ein Netzwerk oder mehrere Netzwerke mit den I/O-Modulen und dem Computer-System gekoppelt.

Gemäß einer alternativen Ausführungsform wird der Schritt b) durch das Computer-System durchgeführt.

Gemäß einer weiteren Ausführungsform ist die Attestierung als eine eigenständige Datenstruktur ausgebildet, welche durch eine kryptographische Prüfsumme geschützt wird. Beispiele hierfür umfassen eine XML-Datenstruktur und eine JSON-Datenstruktur.

Gemäß einer weiteren Ausführungsform ist die Attestierung als ein Verifiable Credential oder als eine Verifiable Presentation ausgebildet.

Gemäß einer weiteren Ausführungsform wird der Schritt a) für eine Vielzahl von authentisierten Kommunikationsverbindungen zwischen einem jeweiligen I/O-Modul und einer jeweiligen Automatisierungs-Einheit zur Bereitstellung einer Vielzahl von kryptographisch geschützten Attestierungen durchgeführt. Dabei wird die Vielzahl der bereitgestellten kryptographischen Attestierungen in einer Datenbank gespeichert und der Schritt b) des Prüfens wird unter Verwendung von Überprüfungs-Routinen durchgeführt, wobei die Überprüfungs-Routinen durch eine Stored-Procedure der Datenbank oder durch einen Smart-Contract einer verteilten kryptographisch geschützten Transaktions-Datenbank ausgebildet werden. Eine verteilte kryptographisch geschützte Transaktions-Datenbank kann auch als Distributed Ledger-Datenbank oder als Blockchain-Infrastruktur-Datenbank bezeichnet werden.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem ersten Aspekt oder einer der Ausführungsformen des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Betreiben eines Automatisierungssystems vorgeschlagen, welches eine erste Anzahl von I/O-Modulen und ein über ein Netzwerk mit der ersten Anzahl von I/O-Modulen gekoppeltes Computer-System aufweisend eine zweite Anzahl von virtualisierten Automatisierungs-Einheiten umfasst. Dabei ist an das jeweilige I/O-Modul eine jeweilige Anzahl von Aktor-/Sensor-Vorrichtungen gekoppelt. Die Vorrichtung umfasst:
eine Bereitstellungs-Einheit zum Bereitstellen einer kryptographisch geschützten Attestierung zur Angabe einer authentisierten Kommunikationsverbindung zwischen einem bestimmten I/O-Modul der ersten Anzahl und einer bestimmten virtualisierten Automatisierungs-Einheit der zweiten Anzahl, wobei die authentisierte Kommunikationsverbindung eine authentisierte Kommunikation zwischen der bestimmten virtualisierten Automatisierungs-Einheit mit dem bestimmten I/O-Modul und mit zumindest einem Teil der mit dem bestimmten I/O-Modul gekoppelten Aktor-/Sensor-Vorrichtungen umfasst, und
eine Prüf-Einheit zum Prüfen der bereitgestellten kryptographisch geschützten Attestierung zur Ermittlung einer Berechtigungs-Information abhängig von dem durch die geprüfte Attestierung bestätigten Zugriff der bestimmten virtualisierten Automatisierungs-Einheit auf das bestimmte I/O-Modul und/oder auf den zumindest einen Teil der mit dem bestimmten I/O-Modul gekoppelten Aktor-/Sensor-Vorrichtungen.

Die für das vorgeschlagene Verfahren beschriebenen Ausführungsformen und Merkmale gelten für die vorgeschlagene Vorrichtung entsprechend.

Die jeweilige Einheit, zum Beispiel die Bereitstellungs-Einheit oder die Prüf-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als integrierter Schaltkreis ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem vierten Aspekt wird ein Automatisierungssystem vorgeschlagen. Das Automatisierungssystem umfasst eine erste Anzahl von I/O-Modulen, wobei an das jeweilige I/O-Modul eine Anzahl von Aktor-/Sensor-Vorrichtungen gekoppelt ist, ein über ein Netzwerk mit der Anzahl von I/O-Modulen gekoppeltes Computer-System aufweisend eine zweite Anzahl von virtualisierten Automatisierungs-Einheiten und eine Vorrichtung zum Betreiben des Automatisierungssystems gemäß dem dritten Aspekt oder gemäß einer der Ausführungsformen des dritten Aspekts.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines Ausführungsbeispiels eines Verfahrens zum Betreiben eines Automatisierungssystems;
- Fig. 2: zeigt ein schematisches Blockschaltbild eines Ausführungsbeispiels eines Automatisierungssystems;
- Fig. 3: zeigt das Ausführungsbeispiel des Automatisierungssystems nach Fig. 2 mit einer eingezeichneten au- thentisierten Kommunikationsverbindung und eingezeichneten Informationsflüssen; und
- Fig. 4: zeigt ein schematisches Blockschaltbild eines Ausführungsbeispiels eines I/O-Moduls.

In den Figuren sind gleiche oder funktionsgleiche Elemente mit denselben Bezugszeichen versehen worden, sofern nichts anderes angegeben ist.

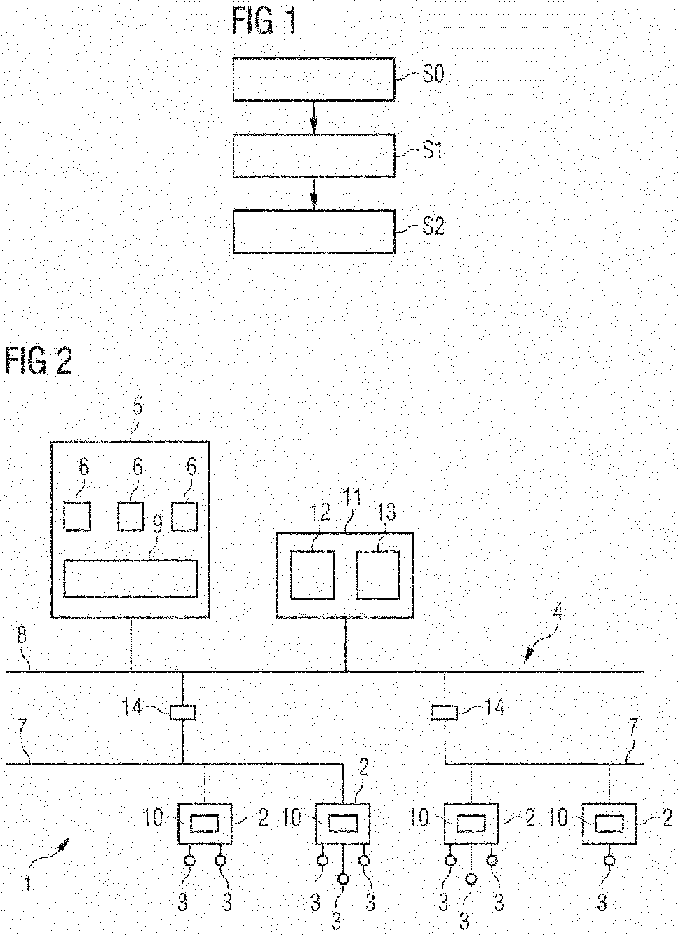

Fig. 1 zeigt ein schematisches Ablaufdiagramm eines Ausführungsbeispiels eines Verfahrens zum Betreiben eines Automatisierungssystems 1.

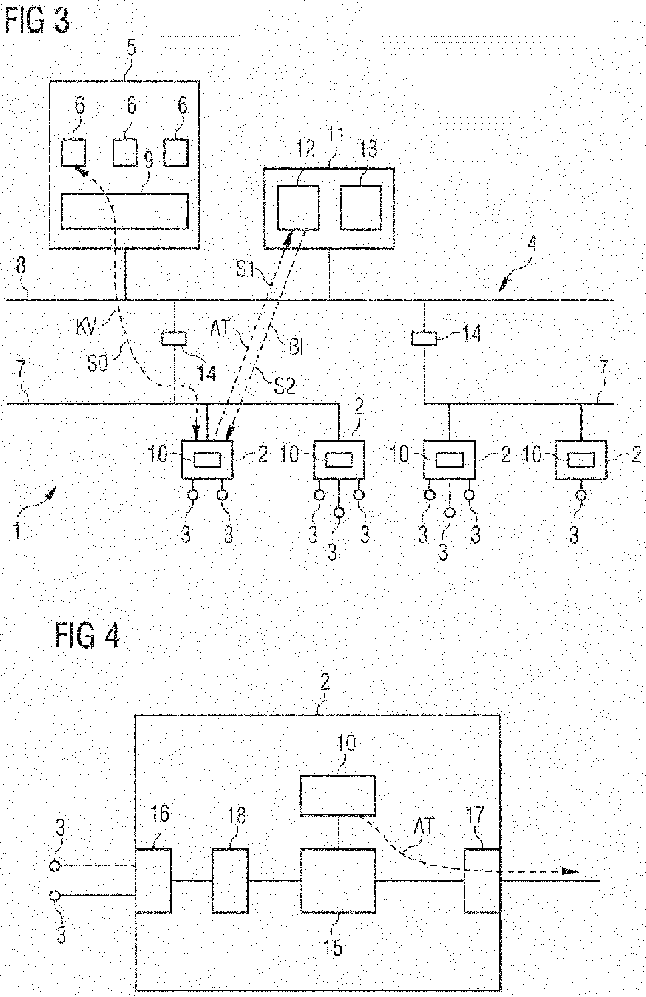

Das Ausführungsbeispiel nach Fig. 1 wird unter Bezugnahme auf die Fig. 2 und 3 erläutert. Hierbei zeigt die Fig. 2 ein schematisches Blockschaltbild eines Ausführungsbeispiels eines Automatisierungssystems 1, und die Fig. 3 zeigt das Automatisierungssystem 1 nach Fig. 2 mit einer eingezeichneten authentisierten Kommunikationsverbindung KV und eingezeichneten Informationsflüssen AT, BI. Das Automatisierungssystem 1 ist beispielsweise zur Herstellung eines bestimmten Produktes, beispielsweise eines Kraftfahrzeuges oder eines chemischen Produktes, geeignet und weist hierzu eine Mehrzahl von Automatisierungskomponenten auf. Dabei hat das Automatisierungssystem 1 nach den Fig. 2 und 3 eine erste Anzahl, insbesondere eine Mehrzahl, von I/O-Modulen 2. An dem jeweiligen I/O-Modul 2 ist eine Anzahl von Aktor-/Sensor-Vorrichtungen 3 gekoppelt. Die jeweilige Aktor-/Sensor-Vorrichtung 3 ist beispielsweise ein Sensor zum Sensieren eines Elementes oder einer Umgebung des Automatisierungssystems 1, oder ein Aktor zum Beeinflussen zumindest einer Automatisierungskomponente des Automatisierungssystems 1 oder eine Sensor- und Aktor-Vorrichtung.

Wie die Fig. 2 und 3 zeigen, hat das Automatisierungssystem 1 zwei voneinander getrennte Steuerungsnetzwerke 7, wobei an jedem der Steuerungsnetzwerke 7 eine Anzahl von I/O-Modulen 2 gekoppelt ist. Ohne Einschränkung der Allgemeinheit hat das Automatisierungssystem 1 der Fig. 2 und 3 zwei Steuerungsnetzwerke 7, wobei an jedem der Steuerungsnetzwerke 7 zwei I/O-Module 2 gekoppelt sind. Ferner hat das Automatisierungssystem 1 nach Fig. 2 und 3 ein Fabriknetzwerk 8, welches den Steuerungsnetzwerken 7 hierarchisch übergeordnet ist. Die Steuernetzwerke 7 sind an das Fabriknetzwerk 8 über ein jeweiliges Gateway 14 gekoppelt und bilden gemeinsam ein Netzwerk 4.

An dem Fabriknetzwerk 8 ist ein Computer-System 5 gekoppelt. Das Computer-System 5 der Fig. 2 und 3 umfasst eine Anzahl, insbesondere eine Mehrzahl, von virtualisierten Automatisierungs-Einheiten 6. Ohne Einschränkung der Allgemeinheit hat das Computer-System 5 der Fig. 2 und 3 drei virtualisierte Automatisierungs-Einheiten 6. Außerdem umfasst das Computer-System 5 der Fig. 2 und 3 eine Ausführungsumgebung 9 zur Ankopplung der virtualisierten Automatisierungs-Einheiten 6. Die Ausführungsumgebung 9 (auch bezeichnet als Runtime Environment) ist zur Ausführung der virtualisierten Automatisierungs-Funktionen 6 auf dem Computer-System 5 geeignet. Insbesondere ist die Ausführungsumgebung 9 zur Ausführung der virtualisierten Automatisierungs-Einheiten 6 auf dem Computer-System 5 und zum Bereitstellen oder Ermöglichen von authentisierten, kryptographisch geschützten Datenübertragungssitzungen zwischen virtualisierten Automatisierungs-Einheiten 6 und IO-Modulen 2 geeignet. In Ausführungsformen ist die Ausführungsumgebung 9 als Echtzeitumgebung ausgebildet.

Des Weiteren ist an das Fabriknetzwerk 8 der Fig. 2 und 3 ein Monitoring-System 11 gekoppelt. Das Monitoring-System 11 weist eine Prüf-Einheit 12 und eine Speicher-Einheit 13 auf.

Nun zu dem Ablaufdiagramm nach Fig. 1, welches die Schritte S0, S1 und S2 umfasst:
In Schritt S0 wird eine authentisierte Kommunikationsverbindung KV zwischen einem bestimmten I/O-Modul 2 und einer bestimmten virtualisierten Automatisierungs-Einheit 6 aufgebaut. Wie in der Fig. 3 gezeigt, wird diese authentisierte Kommunikationsverbindung KV beispielsweise zwischen der ganz links angeordneten virtualisierten Automatisierungs-Einheit 6 und dem ganz links angeordneten I/O-Modul 2 aufgebaut.

In Schritt S1 wird eine kryptographisch geschützte Attestierung AT zur Angabe der authentisierten Kommunikationsverbindung KV zwischen dem bestimmten I/O-Modul 2 und der bestimmten virtualisierten Automatisierungs-Einheit 6 bereitgestellt. Hierbei umfasst die authentisierte Kommunikationsverbindung KV eine authentisierte Kommunikation zwischen der bestimmten virtualisierten Automatisierungs-Einheit 6 mit dem bestimmten I/O-Modul 2 und mit den mit dem bestimmten I/O-Modul 2 gekoppelten Aktor-/Sensor-Vorrichtungen 3. Dies sind in Fig. 3 die beiden ganz links angeordneten Aktor-/Sensor-Vorrichtungen 3. In dem Beispiel der Fig. 3 wird die Attestierung AT durch das bestimmte I/O-Modul 6 ausgestellt, welches die authentisierte Kommunikationsverbindung KV mit der bestimmten virtualisierten Automatisierungs-Einheit 6 hat. Hierzu umfasst, wie die Fig. 2 und 3 zeigen, das jeweilige I/O-Modul 2 eine jeweilige Bereitstellungs-Einheit 10. Die Bereitstellungs-Einheit 10 hat die Eignung, die Attestierung AT auszustellen und anschließend kryptographisch zu schützen. Die kryptographisch geschützte Attestierung AT umfasst insbesondere eine Aktualitäts-Information zur Angabe einer Aktualität der authentisierten Kommunikationsverbindung KV zwischen dem bestimmten I/O-Modul 2 und der bestimmten virtualisierten Automatisierungs-Einheit 6.

Alternativ kann die Attestierung AT auch durch eine Komponente des Computer-Systems 5 ausgestellt werden (nicht gezeigt in den Fig. 2 und 3). Dann ist es auch diese Komponente des Computer-Systems 5, welche die ausgestellte Attestierung AT kryptographisch schützt und damit eine kryptographisch geschützte Attestierung AT bereitstellt. Die bereitgestellte kryptographisch geschützte Attestierung AT wird gemäß der Fig. 3 über das Netzwerk 4 umfassend das Steuernetzwerk 7 und das Fabriknetzwerk 8 an das Monitoring-System 11 übertragen. Dieses Bereitstellen und Übertragen der kryptographisch geschützten Attestierung AT von dem bestimmten I/O-Modul 2 in Fig. 3 an das Monitoring-System 11 ist in der Fig. 3 durch den mit dem Bezugszeichen S1 (für den Verfahrensschritt) und dem Bezugszeichen AT für die Attestierung eingezeichnet Pfeil illustriert.

In Schritt S2 wird die bereitgestellte kryptographisch geschützte Attestierung AT zur Ermittlung einer Berechtigungs-Information BI abhängig von dem durch die geprüfte Attestierung AT bestätigten Zugriff geprüft. In dem Beispiel der Fig. 3 wird diese Prüfung durch die Prüf-Einheit 12 des Monitoring-Systems 11 durchgeführt. Die Berechtigungs-Information BI bestimmt den Zugriff der bestimmten virtualisierten Automatisierungs-Einheit 6 auf das bestimmte I/O-Modul 2 und/oder auf eine oder beide mit dem bestimmten I/O-Modul 2 gekoppelten Aktor-/Sensor-Vorrichtungen 3 der Fig. 3.

Insbesondere kann die Berechtigungs-Information BI in Abhängigkeit des Prüfens der bereitgestellten kryptographisch geschützten Attestierung AT angepasst werden. Dieses Anpassen der Berechtigungs-Information BI kann umfassen:
- ein Registrieren der bestimmten virtualisierten Automatisierungs-Einheit 6 bei dem Automatisierungssystem 1,
- ein Freigeben einer Ausstellung eines digitalen Zertifikats für die bestimmte virtualisierte Automatisierungs-Einheit 6, und/oder
- ein Freigeben eines Zugriffs für die bestimmte virtualisierte Automatisierungs-Einheit 6 auf eine bestimmte Datenbank des Automatisierungssystems 1 (nicht gezeigt) und/oder auf ein bestimmtes Backend-System des Automatisierungssystems 1 (nicht gezeigt).

Vorzugsweise ist die Prüf-Einheit 12 auch dazu eingerichtet, eine bestimmte Art des Zugriffes der bestimmten virtualisierten Automatisierungs-Einheit 6 auf den zumindest einen Teil der mit dem bestimmten I/O-Modul 2 gekoppelten Aktor-/Sensor-Vorrichtungen 3 zu prüfen.

Beispielsweise wird eine Hochlauf-Funktionalität einer von der bestimmten virtualisierten Automatisierungs-Einheit 6 gesteuerten Maschine des Automatisierungssystems 1 in Abhängigkeit der bereitgestellten Berechtigungs-Information BI freigegeben, insbesondere ausschließlich bei Vorliegen der Berechtigungs-Information BI freigegeben. Dabei kann das Freigeben der Hochlauf-Funktionalität auch ein Aktivieren der Hochlauf-Funktionalität umfassen. In weiteren, nicht eigens dargestellten Ausführungsbeispielen, welche im Übrigen dem dargestellten Ausführungsbeispiel entsprechen, wird nicht allein die Hochlauf-Funktionalität der Maschine freigegeben, sondern alternativ oder zusätzlich eine Sicherheitsautokonfigurations-Funktionalität der Maschine, beispielsweise ein Onboarding und/oder ein Provisioning der Maschine. Die Attestierung AT ist insbesondere als eine eigenständige Datenstruktur ausgebildet. Beispiele hierfür umfassen eine XML-Datenstruktur oder eine JSON-Datenstruktur. Diese eigenständige Datenstruktur wird dann vorzugsweise durch eine kryptographische Prüfsumme geschützt, um die kryptographisch geschützte Attestierung AT auszubilden. Die Attestierung AT kann auch als Verifiable Credential oder als Verified Presentation ausgebildet sein.

Der Schritt S1 wird insbesondere für eine Vielzahl von authentisierten Kommunikationsverbindungen KV zwischen einem jeweiligen I/O-Modul 2 und einer jeweiligen virtualisierten Automatisierungs-Einheit 6 zur Bereitstellung einer Vielzahl von kryptographisch geschützten Attestierungen AT durchgeführt. Diese Vielzahl der bereitgestellten kryptographischen Attestierungen AT wird vorzugsweise in einer Datenbank oder Speicher-Einheit 13 gespeichert, und der Schritt S2 des Prüfens wird unter Verwendung von Überprüfungs-Routinen durchgeführt, welche insbesondere ebenfalls in der Speicher-Einheit 13 gespeichert sind. Dabei werden diese Überprüfungs-Routinen vorzugsweise durch eine Stored-Procedure der Speicher-Einheit 13 oder durch einen Smart-Contract einer verteilten kryptographisch geschützten Transaktions-Datenbank (nicht gezeigt) ausgebildet.

Die Schritte S1 und S2 der Fig. 1 werden insbesondere im laufenden, operativen Betrieb des Automatisierungssystems 1 wiederholt, insbesondere wiederholt nach einem vorbestimmten Muster, durchgeführt.

Zusätzlich zu dieser Berechtigungsprüfung, bei der durch Prüfen der Attestierung AT ermittelt wird, ob eine bestimmte virtualisierte Automatisierungskomponente aktuell auf bestimmte I/O-Module 2 und/oder auf bestimmte bestimmten mit einem I/O-Modul 2 gekoppelte Aktor-/Sensor-Vorrichtungen 3 zugreifen kann, können weitere Berechtigungsprüfungen erfolgen (nicht gezeigt), z.B. eine Prüfung einer Zugriffskontrollliste.

In Fig. 4 ist ein schematisches Blockschaltbild eines Ausführungsbeispiels eines I/O-Moduls 2 dargestellt.

Das I/O-Modul 2 der Fig. 4 umfasst eine Bereitstellungs-Einheit 10 zur Bereitstellung einer kryptographisch geschützten Attestierung AT (siehe auch Figs. 2 und 3), eine Kommunikations-Einheit 15, eine Schnittstellen-Einheit 16 zur Anbindung der Aktor-/Sensor-Vorrichtungen 3, eine Netzwerk-Schnittstelle 17 zum Koppeln an das Netzwerk 4 und eine zwischen der Kommunikations-Einheit 15 und der Schnittstellen-Einheit 16 gekoppelte Verarbeitungs-Einheit 18. Die Kommunikations-Einheit 15 ist zur Bereitstellung einer sicheren Kommunikation, insbesondere zum Aufbau von authentisierten Kommunikationsverbindungen KV geeignet. Hierzu kann die Kommunikations-Einheit 15 ein erstes Modul für Netzverkehr Ver- und Entschlüsselung (Network Traffic Encryption/Decryption) sowie ein zweites Modul zur Authentisierung und Schlüsselverarbeitung (Authentication and Key Agreement) aufweisen.

Die Verarbeitungs-Einheit 18 ist zur Verarbeitung von Steuerbefehlen von und zu den Aktor-/Sensor-Vorrichtungen 3 eingerichtet. Wie die Fig. 4 illustriert, kann die Bereitstellungs-Einheit 10 die Attestierung AT bereitstellen und kryptographisch schützen und anschließend als kryptographisch geschützte Attestierung über die Netzwerk-Schnittstelle 17 über das Netzwerk 4 bereitstellen, insbesondere an das Monitoring-System 11 (siehe Fig. 3). Hierzu kann die Bereitstellungs-Einheit 10 eine Attestierungs-Einheit zur Ausstellung der Attestierung und eine Verschlüsselungseinheit zum kryptographischen Schützen der ausgestellten Attestierung aufweisen. Hierbei kann insbesondere ein in dem I/O-Modul 2 gespeicherter Attestierungs-Schlüssel verwendet werden. Die Verschlüsselungseinheit zum kryptographischen Schützen der ausgestellten Attestierung kann beispielsweise eine digitale Signatur oder einen Nachrichtenauthentisierungscode der Attestierung bilden, oder sie kann ein der Attestierung entsprechendes Verifiable Credential oder eine der Attestierung entsprechende Verifiable Presentation bilden, oder sie kann die Attestierung über einen kryptographisch geschützten Übertragungskanal übertragen.

Die Aktor-/Sensor-Vorrichtungen 3 können, wie in der Fig. 4 gezeigt, extern dem I/O-Modul 2 sein. In Ausführungsformen kann zumindest eine der Aktor-/Sensor-Vorrichtungen 3 auch in dem I/O-Modul 2 integriert sein. Durch die vorliegende Attestierung AT wird kryptographisch geschützt bestätigt, welcher authentisierte Kommunikationspartner des I/O-Moduls 2, in dem Beispiel der Fig. 3 die ganz links dargestellte virtualisierte Automatisierungs-Einheit 6, aktuell tatsächlich Zugriff auf das I/O-Modul 2 als Ganzes bzw. auf bestimmte Aktor-/Sensor-Vorrichtungen 3 des I/O-Moduls 2 oder auf eine bestimmte Aktor-/Sensor-Vorrichtung 3 hat. Dabei ist es möglich, dass einzelne Schnittstellen für die Aktor-/Sensor-Vorrichtungen 3 der Schnittstellen-Einheit 16 durch einen eigenen Bezeichner oder Identifier identifiziert werden, der in der Attestierung AT enthalten ist, oder dass eine einzelne verbundene Aktor-/Sensor-Vorrichtung 3 identifiziert wird.

Hierzu kann ein expliziter Identifier oder ein durch einen von dem I/O-Modul 2 ermittelter digitaler Fingerabdruck der Aktor-/Sensor-Vorrichtung 3 oder anhand von der Aktor-/Sensor-Vorrichtung 3 zugeordneten Kalibrierungsdaten oder Konfigurationsdaten verwendet werden. Somit kann auch eine Berechtigung angepasst werden, wenn kein Zugriff auf eine bestimmte, korrekt konfigurierte und kalibrierte Aktor-/Sensor-Vorrichtung 3 vorliegt.

Obwohl die vorliegende Erfindung anhand von Ausführungsbeispielen beschrieben wurde, ist sie vielfältig modifizierbar.

## Patentansprüche

1. Verfahren zum Betreiben eines Automatisierungssystems (1), welches eine erste Anzahl von I/O-Modulen (2), wobei an das jeweilige I/O-Modul (2) eine Anzahl von Aktor-/Sensor-Vorrichtungen (3) gekoppelt ist, und ein über ein Netzwerk (4) mit der Anzahl von I/O-Modulen (2) gekoppeltes Computer-System (5) aufweisend eine zweite Anzahl von virtualisierten Automatisierungs-Einheiten (6) umfasst, mit:
a) Bereitstellen (S1) einer kryptographisch geschützten Attestierung (AT) zur Angabe einer authentisierten Kommunikationsverbindung (KV) zwischen einem bestimmten I/O-Modul (2) der ersten Anzahl und einer bestimmten virtualisierten Automatisierungs-Einheit (6) der zweiten Anzahl, wobei die authentisierte Kommunikationsverbindung (KV) eine authentisierte Kommunikation zwischen der bestimmten virtualisierten Automatisierungs-Einheit (6) mit dem bestimmten I/O-Modul (2) und mit zumindest einem Teil der mit dem bestimmten I/O-Modul (2) gekoppelten Aktor-/Sensor-Vorrichtungen (3) umfasst, und
b) Prüfen (S2) der bereitgestellten kryptographisch geschützten Attestierung (AT) zur Ermittlung einer Berechtigungs-Information (BI) abhängig von dem durch die geprüfte Attestierung (AT) bestätigten Zugriff der bestimmten virtualisierten Automatisierungs-Einheit (6) auf das bestimmte I/O-Modul (2) und/oder auf den zumindest einen Teil der mit dem bestimmten I/O-Modul (2) gekoppelten Aktor-/Sensor-Vorrichtung (3), wobei eine Hochlauf-Funktionalität und/oder eine Sicherheitsautokonfigurations-Funktionalität, insbesondere ein Onboarding und/oder ein Provisioning, einer von der bestimmten virtualisierten Automatisierungs-Einheit gesteuerten Maschine des Automatisierungssystems in Abhängigkeit der Berechtigungs-Information (BI) freigegeben wird.

2. Verfahren nach Anspruch 1, bei welchem die Hochlauf-Funktionalität und/oder die Sicherheitsautokonfigurations-Funktionalität derart in Abhängigkeit der Berechtigungs-Information (BI) freigegeben wird, dass sie ausschließlich bei Vorliegen der Berechtigungs-Information freigegeben wird.

3. Verfahren nach Anspruch 1 oder 2,
**dadurch gekennzeichnet,**
**dass** die Berechtigungs-Informationen (BI) in Abhängigkeit des Prüfens der bereitgestellten kryptographisch geschützten Attestierung (AT) angepasst wird.

4. Verfahren nach Anspruch 3,
**dadurch gekennzeichnet,**
**dass** das Anpassen der Berechtigungs-Information (BI) umfasst:
- ein Registrieren der bestimmten virtualisierten Automatisierungs-Einheit (6) bei dem Automatisierungssystem (1),
- ein Freigeben einer Ausstellung eines digitalen Zertifikats für die bestimmte virtualisierte Automatisierungs-Einheit (6), und/oder
- ein Freigeben eines Zugriffs für die bestimmte virtualisierte Automatisierungs-Einheit (6) auf eine bestimmte Datenbank des Automatisierungssystems (1) und/oder auf ein bestimmtes Backend-System des Automatisierungssystems (1) .

5. Verfahren nach einem der Ansprüche 1 bis 4,
**dadurch gekennzeichnet,**
**dass** die erste Anzahl von I/O-Modulen (2) und die Aktor-/Sensor-Vorrichtungen (3) in einem Steuerungs-Netzwerk (7) zur Steuerung von Automatisierungskomponenten des Automatisierungsnetzwerkes (1) angeordnet sind und das Computer-System (5) in einem dem Steuerungsnetzwerk (7) übergeordnetem Netzwerk (8), insbesondere einem Fabrik-Netzwerk, angeordnet ist.

6. Verfahren nach einem der Ansprüche 1 bis 5,
**dadurch gekennzeichnet,**
**dass** die kryptographisch geschützte Attestierung (AT) eine Aktualitäts-Information zur Angabe eine Aktualität der authentisierten Kommunikationsverbindung (KV) zwischen dem bestimmten I/O-Modul (2) und der bestimmten virtualisierte Automatisierungs-Einheit (6) umfasst.

7. Verfahren nach einem der Ansprüche 1 bis 6,
**dadurch gekennzeichnet,**
**dass** der Schritt a) umfasst:
- Ausstellen der Attestierung (AT) durch das bestimmte I/O-Modul (2), und
- kryptographisches Schützen der ausgestellten Attestierung (AT) durch das bestimmte I/O-Modul (2).

8. Verfahren nach einem der Ansprüche 1 bis 7,
**dadurch gekennzeichnet,**
**dass** der Schritt a) umfasst:
- Ausstellen der Attestierung (AT) durch eine Komponente, insbesondere eine Hardware-Komponente, des Computer-Systems (5), und
- kryptographisches Schützen der ausgestellten Attestierung (AT) durch eine Komponente, insbesondere eine Hardware-Komponente, des Computer-Systems (5).

9. Verfahren nach einem der Ansprüche 1 bis 8,
**dadurch gekennzeichnet,**
**dass** der Schritt b) umfasst:
- Prüfen einer bestimmten Art des Zugriffes der bestimmten virtualisierten Automatisierungs-Einheit (6) auf den zumindest einen Teil der mit dem bestimmten I/O-Modul (2) gekoppelten Aktor-/Sensor-Vorrichtungen (3).

10. Verfahren nach einem der Ansprüche 1 bis 9,
**dadurch gekennzeichnet,**
**dass** der Schritt b) (S2) im laufenden, operativen Betrieb des Automatisierungssystems (1) wiederholt, insbesondere wiederholt nach einem vorbestimmten Muster, durchgeführt wird.

11. Verfahren nach einem der Ansprüche 1 bis 10,
**dadurch gekennzeichnet,**
**dass** der Schritt b) (S2) durch eine von der ersten Anzahl von I/O-Modulen (2) und von dem Computer-System (5) separaten Überprüfungs-Einheit (12) durchgeführt wird.

12. Verfahren nach einem der Ansprüche 1 bis 11,
**dadurch gekennzeichnet,**
**dass** die Attestierung (AT) als eine eigenständige Datenstruktur, insbesondere als eine XML-Datenstruktur oder als eine
JSON-Datenstruktur ausgebildet ist, welche durch eine kryptographische Prüfsumme geschützt wird, oder
**dass** die Attestierung (AT) als ein Verifiable Credential oder als eine Verifiable Presentation ausgebildet ist.

13. Verfahren nach einem der Ansprüche 1 bis 12,
**dadurch gekennzeichnet,**
**dass** der Schritt a) (S1) für eine Vielzahl von authentisierten Kommunikationsverbindungen (KV) zwischen einem jeweiligen I/O-Modul (2) und einer jeweiligen virtualisierten Automatisierungs-Einheit (6) zur Bereitstellung einer Vielzahl von kryptographisch geschützten Attestierungen (AT) durchgeführt wird, wobei die Vielzahl der bereitgestellten kryptographisch geschützten Attestierungen (AT) in einer Datenbank (13) gespeichert wird und der Schritt b) (S2) des Prüfens unter Verwendung von Überprüfungs-Routinen durchgeführt wird, wobei die Überprüfungs-Routinen durch eine Stored-Procedure der Datenbank (13) oder durch einen Smart-Contract einer verteilten kryptographisch geschützten Transaktions-Datenbank ausgebildet werden.

14. Computerprogrammprodukt, welches auf einer programmgesteuerten Einrichtung die Durchführung des Verfahrens nach einem der Ansprüche 1 bis 13 veranlasst.

15. Vorrichtung zum Betreiben eines Automatisierungssystems (1), welches eine erste Anzahl von I/O-Modulen (2), wobei an das jeweilige I/O-Modul (2) eine Anzahl von Aktor-/Sensor-Vorrichtungen (3) gekoppelt ist, und ein über ein Netzwerk (4) mit der Anzahl von I/O-Modulen (2) gekoppeltes Computer-System (5) aufweisend eine zweite Anzahl von virtualisierten Automatisierungs-Einheiten (6) umfasst, mit:
einer Bereitstellungs-Einheit (10) zum Bereitstellen einer kryptographisch geschützten Attestierung (AT) zur Angabe einer authentisierten Kommunikationsverbindung (KV) zwischen einem bestimmten I/O-Modul (2) der ersten Anzahl und einer bestimmten virtualisierten Automatisierungs-Einheit (6) der zweiten Anzahl, wobei die authentisierte Kommunikationsverbindung (KV) eine authentisierte Kommunikation zwischen der bestimmten virtualisierten Automatisierungs-Einheit (6) mit der bestimmten I/O-Modul (2) und mit zumindest einem Teil der mit dem bestimmten I/O-Modul (2) gekoppelten Aktor-/Sensor-Vorrichtungen (3) umfasst, und
einer Prüf-Einheit (12) zum Prüfen der bereitgestellten kryptographisch geschützten Attestierung (AT) zur Ermittlung einer Berechtigungs-Information (BI) abhängig von dem durch die geprüfte Attestierung (AT) bestätigten Zugriff der bestimmten virtualisierten Automatisierungs-Einheit (6) auf das bestimmte I/O-Modul (2) und/oder auf den zumindest einen Teil der mit dem bestimmten I/O-Modul (2) gekoppelten Aktor-/Sensor-Vorrichtungen (3), wobei eine Hochlauf-Funktionalität und/oder eine Sicherheitsautokonfigurations-Funktionalität, insbesondere ein Onboarding und/oder ein Provisioning, einer von der bestimmten virtualisierten Automatisierungs-Einheit gesteuerten Maschine des Automatisierungssystems in Abhängigkeit der Berechtigungs-Information (BI) freigegeben wird.

16. Automatisierungssystem (1), welches eine erste Anzahl von I/O-Modulen (2), wobei an das jeweilige I/O-Modul (2) eine Anzahl von Aktor-/Sensor-Vorrichtungen (3) gekoppelt ist, ein über ein Netzwerk (4) mit der Anzahl von I/O-Modulen (2) gekoppeltes Computer-System (5) aufweisend eine zweite Anzahl von virtualisierten Automatisierungs-Einheiten (6) und eine Vorrichtung zum Betreiben des Automatisierungssystems (1) nach Anspruch 15 aufweist.

## Claims

1. Method for operating an automation system (1) which comprises a first number of I/O modules (2), a number of actuator/sensor devices (3) being coupled to the respective I/O module (2), and a computer system (5) which is coupled to the number of I/O modules (2) via a network (4) and has a second number of virtualized automation units (6), the method comprising:
a) providing (S1) a cryptographically protected attestation (AT) for indicating an authenticated communication connection (KV) between a specified I/O module (2) of the first number and a specified virtualized automation unit (6) of the second number, the authenticated communication connection (KV) comprising an authenticated communication between the specified virtualized automation unit (6) and the specified I/O module (2) and at least one portion of the actuator/sensor devices (3) coupled to the specified I/O module (2), and
b) checking (S2) the provided cryptographically protected attestation (AT) in order to determine authorization information (BI) depending on the access by the specified virtualized automation unit (6) to the specified I/O module (2) and/or to the at least one portion of the actuator/sensor device (3) coupled to the specified I/O module (2), said access being confirmed by the checked attestation (AT), a start-up functionality and/or a security autoconfiguration functionality, in particular onboarding and/or provisioning, of a machine of the automation system that is controlled by the specified virtualized automation unit being enabled depending on the authorization information (BI).

2. Method according to Claim 1, wherein the start-up functionality and/or the security autoconfiguration functionality are/is enabled depending on the authorization information (BI) in such a way as to be enabled exclusively when the authorization information is present.

3. Method according to Claim 1 or 2,
**characterized**
**in that** the authorization information (BI) is adapted depending on the checking of the provided cryptographically protected attestation (AT).

4. Method according to Claim 3,
**characterized**
**in that** adapting the authorization information (BI) comprises:
- registering the specified virtualized automation unit (6) at the automation system (1),
- enabling an issuing of a digital certificate for the specified virtualized automation unit (6), and/or
- enabling an access for the specified virtualized automation unit (6) to a specified database of the automation system (1) and/or to a specified backend system of the automation system (1).

5. Method according to any of Claims 1 to 4,
**characterized**
**in that** the first number of I/O modules (2) and the actuator/sensor devices (3) are arranged in a control network (7) for controlling automation components of the automation network (1), and the computer system (5) is arranged in a network (8) superordinate to the control network (7), in particular a factory network.

6. Method according to any of Claims 1 to 5,
**characterized**
**in that** the cryptographically protected attestation (AT) comprises up-to-date status information for indicating an up-to-date status of the authenticated communication connection (KV) between the specified I/O module (2) and the specified virtualized automation unit (6).

7. Method according to any of Claims 1 to 6,
**characterized**
**in that** step a) comprises:
- issuing the attestation (AT) by way of the specified I/O module (2), and
- cryptographically protecting the issued attestation (AT) by way of the specified I/O module (2).

8. Method according to any of Claims 1 to 7,
**characterized**
**in that** step a) comprises:
- issuing the attestation (AT) by way of a component, in particular a hardware component, of the computer system (5), and
- cryptographically protecting the issued attestation (AT) by way of a component, in particular a hardware component, of the computer system (5).

9. Method according to any of Claims 1 to 8,
**characterized**
**in that** step b) comprises:
- checking a specified type of the access by the specified virtualized automation unit (6) to the at least one portion of the actuator/sensor devices (3) coupled to the specified I/O module (2).

10. Method according to any of Claims 1 to 9,
**characterized**
**in that** step b) (S2) is carried out repeatedly, in particular repeatedly according to a predetermined pattern, during ongoing operative operation of the automation system (1).

11. Method according to any of Claims 1 to 10,
**characterized**
**in that** step b) (S2) is carried out by a checking unit (12) separate from the first number of I/O modules (2) and from the computer system (5).

12. Method according to any of Claims 1 to 11,
**characterized**
**in that** the attestation (AT) is embodied as an independent data structure, in particular as an XML data structure or as a JSON data structure, which is protected by a cryptographic checksum, or
**in that** the attestation (AT) is embodied as a verifiable credential or as verifiable presentation.

13. Method according to any of Claims 1 to 12,
**characterized**
**in that** step a) (S1) is carried out for a multiplicity of authenticated communication connections (KV) between a respective I/O module (2) and a respective virtualized automation unit (6) for providing a multiplicity of cryptographically protected attestations (AT), the multiplicity of provided cryptographically protected attestations (AT) being stored in a database (13), and step b) (S2) of checking is carried out using checking routines, the checking routines being formed by a stored procedure of the database (13) or by a smart contract of a distributed cryptographically protected transaction database.

14. Computer program product which causes the method according to any of Claims 1 to 13 to be carried out on a program-controlled apparatus.

15. Device for operating an automation system (1) which comprises a first number of I/O modules (2), a number of actuator/sensor devices (3) being coupled to the respective I/O module (2), and a computer system (5) which is coupled to the number of I/O modules (2) via a network (4) and has a second number of virtualized automation units (6), the device comprising:
a providing unit (10) for providing a cryptographically protected attestation (AT) for indicating an authenticated communication connection (KV) between a specified I/O module (2) of the first number and a specified virtualized automation unit (6) of the second number, the authenticated communication connection (KV) comprising an authenticated communication between the specified virtualized automation unit (6) and the specified I/O module (2) and at least one portion of the actuator/sensor devices (3) coupled to the specified I/O module (2), and
a checking unit (12) for checking the provided cryptographically protected attestation (AT) in order to determine authorization information (BI) depending on the access by the specified virtualized automation unit (6) to the specified I/O module (2) and/or to the at least one portion of the actuator/sensor devices (3) coupled to the specified I/O module (2), said access being confirmed by the checked attestation (AT), a start-up functionality and/or a security autoconfiguration functionality, in particular onboarding and/or provisioning, of a machine of the automation system that is controlled by the specified virtualized automation unit being enabled depending on the authorization information (BI).

16. Automation system (1) having a first number of I/O modules (2), a number of actuator/sensor devices (3) being coupled to the respective I/O module (2), and a computer system (5) which is coupled to the number of I/O modules (2) via a network (4) and has a second number of virtualized automation units (6), and a device for operating the automation system (1) according to Claim 15.

## Revendications

1. Procédé de fonctionnement d'un système d'automatisation (1), lequel comprend un premier nombre de modules I/O (2), dans lequel à chaque module I/O (2) est accouplé un nombre de dispositifs actionneurs/capteurs (3), et un système informatique (5), accouplé au nombre de modules I/O (2) par un réseau (4), présentant un deuxième nombre d'unités d'automatisation virtualisées (6), avec :
a) la fourniture (S1) d'une attestation (AT) protégée d'une manière cryptographique pour indiquer une liaison de communication authentifiée (KV) entre un module I/O (2) spécifié du premier nombre et une unité d'automatisation virtualisée (6) spécifiée du deuxième nombre, dans lequel la liaison de communication authentifiée (KV) comprend une communication authentifiée entre l'unité d'automatisation virtualisée (6) spécifiée avec le module I/O (2) spécifié et avec au moins une partie des dispositifs actionneurs/capteurs (3) accouplés au module I/0 (2) spécifié, et
b) la vérification (S2) de l'attestation (AT) protégée d'une manière cryptographique fournie pour déterminer une information d'autorisation (BI) en fonction de l'accès, confirmé par l'attestation (AT) vérifiée, de l'unité d'automatisation virtualisée (6) spécifiée au module I/O (2) spécifié et/ou à la au moins une partie du dispositif actionneur/capteur (3) accouplé au module I/O (2) spécifié, dans lequel une fonctionnalité de lancement et/ou une fonctionnalité d'autoconfiguration de sécurité, en particulier un Onboarding et/ou un Provisioning, d'une machine, commandée par l'unité d'automatisation virtualisée spécifiée, du système d'automatisation est validée en fonction de l'information d'autorisation (BI).

2. Procédé selon la revendication 1, dans lequel la fonctionnalité de lancement et/ou la fonctionnalité d'autoconfiguration de sécurité est validée en fonction de l'information d'autorisation (BI) d'une manière telle qu'elle est validée exclusivement en présence de l'information d'autorisation.

3. Procédé selon la revendication 1 ou 2, **caractérisé en ce que** les informations d'autorisation (BI) sont adaptées en fonction de la vérification de l'attestation (AT) fournie, protégée d'une manière cryptographique.

4. Procédé selon la revendication 3, **caractérisé en ce que** l'adaptation de l'information d'autorisation (BI) comprend :
- un enregistrement de l'unité d'automatisation virtualisée (6) spécifiée dans le système d'automatisation (1),
- une validation d'une émission d'un certificat numérique pour l'unité d'automatisation virtualisée (6) spécifiée, et/ou
- une validation d'un accès pour l'unité d'automatisation virtualisée (6) spécifiée à une base de données spécifiée du système d'automatisation (1) et/ou à un système d'arrière-plan spécifié du système d'automatisation (1).

5. Procédé selon l'une des revendications 1 à 4, **caractérisé en ce que** le premier nombre de modules I/0 (2) et les dispositifs actionneurs/capteurs (3) sont disposés dans un réseau de commande (7) pour commander des composants d'automatisation du réseau d'automatisation (1) et le système informatique (5) est disposé dans un réseau superposé (8) au réseau de commande (7), en particulier un réseau d'usine.

6. Procédé selon l'une des revendications 1 à 5, **caractérisé en ce que** l'attestation (AT) protégée d'une manière cryptographique comprend une information d'actualité pour indiquer une actualité de la liaison de communication authentifiée (KV) entre le module I/O (2) spécifié et l'unité d'automatisation virtualisée (6) spécifiée.

7. Procédé selon l'une des revendications 1 à 6, **caractérisé en ce que** l'étape a) comprend :
- l'émission de l'attestation (AT) par le module I/O (2) spécifié, et
- la protection cryptographique de l'attestation émise (AT) par le module I/O (2) spécifié.

8. Procédé selon l'une des revendications 1 à 7, **caractérisé en ce que** l'étape a) comprend :
- l'émission de l'attestation (AT) par un composant, en particulier un composant matériel, du système informatique (5), et
- la protection cryptographique de l'attestation émise (AT) par un composant, en particulier un composant matériel, du système informatique (5).

9. Procédé selon l'une des revendications 1 à 8, **caractérisé en ce que** l'étape b) comprend :
- la vérification d'un certain type d'accès de l'unité d'automatisation virtualisée (6) spécifiée à la au moins une partie des dispositifs actionneurs/capteurs (3) accouplés au module I/O (2) spécifié.

10. Procédé selon l'une des revendications 1 à 9, **caractérisé en ce que** l'étape b) (S2) est exécutée en étant répétée pendant le fonctionnement opérationnel courant du système d'automatisation (1), en particulier en étant répétée selon un modèle prédéterminé.

11. Procédé selon l'une des revendications 1 à 10, **caractérisé en ce que** l'étape b) (S2) est exécutée par une unité de vérification (12) distincte du premier nombre de modules I/O (2) et du système informatique (5).

12. Procédé selon l'une des revendications 1 à 11, **caractérisé en ce que** l'attestation (AT) est conçue comme une structure de données autonome, en particulier comme une structure de données XML ou comme une structure de données JSON, laquelle est protégée par une somme de contrôle cryptographique, ou **en ce que** l'attestation (AT) est conçue comme un Verifiable Credential ou comme une Verifiable Presentation.

13. Procédé selon l'une des revendications 1 à 12, **caractérisé en ce que** l'étape a) (S1) est exécutée pour une pluralité de liaisons de communication authentifiées (KV) entre un module I/O (2) respectif et une unité d'automatisation virtualisée (6) respective pour fournir une pluralité d'attestations (AT) protégées d'une manière cryptographique, dans lequel la pluralité des attestations (AT) fournies, protégées d'une manière cryptographique, est enregistrée dans une base de données (13) et l'étape b) (S2) de la vérification est exécutée en utilisant des routines de vérification, dans lequel les routines de vérification sont constituées par une Stored-Procedure de la base de données (13) ou par un Smart-Contract d'une base de données transactionnelle distribuée protégée d'une manière cryptographique.

14. Produit de programme informatique, lequel provoque l'exécution du procédé selon l'une des revendications 1 à 13 sur un dispositif commandé par programme.

15. Dispositif de fonctionnement d'un système d'automatisation (1), lequel comprend un premier nombre de modules I/O (2), dans lequel à chaque module I/O (2) est accouplé un nombre de dispositifs actionneurs/capteurs (3), et un système informatique (5), accouplé au nombre de modules I/O (2) par un réseau (4), présentant un deuxième nombre d'unités d'automatisation virtualisées (6), avec :
une unité de fourniture (10) pour la fourniture d'une attestation (AT) protégée d'une manière cryptographique pour indiquer une liaison de communication authentifiée (KV) entre un module I/O (2) spécifié du premier nombre et une unité d'automatisation virtualisée (6) spécifiée du deuxième nombre, dans lequel la liaison de communication authentifiée (KV) comprend une communication authentifiée entre l'unité d'automatisation virtualisée (6) spécifiée avec le module I/O (2) spécifié et avec au moins une partie des dispositifs actionneurs/capteurs (3) accouplés au module I/O spécifié (2), et
une unité de vérification (12) pour vérifier l'attestation (AT) fournie, protégée d'une manière cryptographique, pour déterminer une information d'autorisation (BI) en fonction de l'accès, confirmé par l'attestation (AT) vérifiée, de l'unité d'automatisation virtualisée (6) spécifiée au module I/O (2) spécifié et/ou à la au moins une partie des dispositifs actionneurs/capteurs (3) accouplés au module I/O (2), dans lequel une fonctionnalité de lancement et/ou une fonctionnalité d'auto-configuration de sécurité, en particulier un Onboarding et/ou un Provisioning, d'une machine, commandée par l'unité d'automatisation virtualisée spécifiée, du système d'automatisation est validée en fonction de l'information d'autorisation (BI).

16. Système d'automatisation (1), lequel présente un premier nombre de modules I/O (2), dans lequel à chaque module I/O (2) est accouplé un nombre de dispositifs actionneurs/capteurs (3), un système informatique (5), accouplé au nombre de modules I/O (2) par un réseau (4), présentant un deuxième nombre d'unités d'automatisation virtualisées (6) et un dispositif de fonctionnement du système d'automatisation (1) selon la revendication 15.
